# EUROPÄISCHE PATENTSCHRIFT

(11) **EP 4 147 885 B1**
(45) Veröffentlichungstag und Bekanntmachung des Hinweises auf die Patenterteilung: **27.03.2024**
(21) Anmeldenummer: 22186849.0
(22) Anmeldetag: 26.07.2022
(51) Int. Cl.: B60C 11/03, B60C 11/12

(54) **FAHRZEUGREIFEN**
VEHICLE TYRES
PNEU DE VÉHICULE

(30) Priorität: 08.09.2021 DE 102021209903
(43) Veröffentlichungstag der Anmeldung: 15.03.2023
(73) Patentinhaber: Continental Reifen Deutschland GmbH, 30175 Hannover (DE)
(72) Erfinder: Herbst, Stephan, 30165 Hannover (DE); Dr. Zimmermann, Fabian, 30165 Hannover (DE); Rittweger, Stefan, 30165 Hannover (DE)
(74) Vertreter: Continental Corporation

(56) Entgegenhaltungen:
- EP-A1- 0 739 758
- EP-A1- 2 471 670
- EP-A1- 3 093 163
- EP-B1- 3 009 275

## Beschreibung

Die Erfindung betrifft einen Fahrzeugluftreifen mit einem Laufstreifen, welcher durch Umfangsrillen in schulterseitige Profilrippen und mittlere Profilrippen gegliedert ist, wobei zumindest eine der mittleren Profilrippen durch Schrägrillen in blockartige Profilstrukturen gegliedert sind, welche Pitches mit drei bis fünf unterschiedlichen Umfangslängen bilden,
und wobei die Schrägrillen jeweils einen ersten Rillenabschnitt, welcher in die die Profilrippen weiter laufstreifenaußenseitig begrenzende Umfangsrille einmündet und unter einem Winkel von 25° bis 40° zur Umfangsrichtung verläuft, und einen zweiten Rillenabschnitt aufweisen, welcher an den ersten Rillenabschnitt anschließt, innerhalb der Profilrippe frei endet und unter einem Winkel von 2° bis 15° zur Umfangsrichtung verläuft.

Die EP 0739758 A1, EP 3009275 B1, EP 3093163 A1 und EP 2471670 A1 offenbaren jeweils einen Fahrzeugluftreifen mit einem Laufstreifen mit einer Schrägrille.

Aus der EP 3009275 B1 ist ein gattungsbildender Fahrzeugluftreifen mit einem Laufstreifen bekannt welcher ein laufrichtungsgebundenes Profil mit zumindest einer seitlich von Umfangsrillen begrenzten Profilrippe aufweist, welche mit einer Vielzahl von Schrägrillen versehen ist. Die Schrägrillen weisen drei Rillenabschnitte mit unterschiedlichen Tiefen auf und verlaufen von der die Profilrippe laufstreifenaußenseitig begrenzenden Umfangsrille ausgehend in die Profilrippe hinein und enden innerhalb der Profilrippe in einem Abstand von 2,00 mm bis 3,00 mm zur zweiten, die Profilrippe begrenzenden Umfangsrille. Derart gestaltete Schrägrillen sollen für ein verbessertes Wasserableitvermögen sorgen.

Die Profilstrukturen in Laufstreifen von Fahrzeugluftreifen werden aus Gründen des Abrollgeräusches nach einem Verfahren der Pitch- Längenvariation ausgelegt. Dabei bilden beispielsweise weitgehend gleichartig ausgeführte, sich über den Umfang des Laufstreifens wiederholende Profilstrukturen sogenannte Pitches mit unterschiedlicher Pitchlängen (Umfangslängen). Üblich ist eine Gliederung von Profilstrukturen in drei bis fünf Pitches, die sich vor allem in ihren Umfangslängen unterscheiden und beispielsweise bei einem Laufstreifen mit Profilstrukturen mit Schrägrillen jeweils eine Schrägrille und die bis zur nächsten Schrägrille anschließende Profilstruktur umfassen. Es wird rechnerisch eine Pitchfolge ermittelt, in welcher die Anordnung der Pitches unterschiedlicher Längen über den Reifenumfang festgelegt wird, um ein möglichst geringes Abrollgeräusch zu erzielen. Dabei können in einer Pitchfolge an manchen Stellen des Reifenumfangs auch zwei oder mehr Pitches gleicher Pitchlänge unmittelbar aufeinander folgen.

In den Pitches unterschiedlicher Umfangslängen befinden sich daher unterschiedlich große und unterschiedlich steife Profilblöcke bzw. blockartige Profilstrukturen, die infolge ihrer optimierten Anordnung über den Reifenumfang einen positiven Effekt auf das Abrollgeräusch haben, jedoch einen negativen Einfluss auf den Laufstreifenabrieb nehmen, insbesondere bewirken sie einen ungleichmäßigen Abrieb über den Reifenumfang. Ein üblicher Ansatz, um diese unterschiedlichen Größen bzw., Volumina von Profilblöcken oder blockartigen Profilstrukturen hinsichtlich der Blocksteifigkeit zu vereinheitlichen, besteht darin, die Breite und/oder die Tiefe von Quernuten oder Schrägrillen zu variieren und Einschnitte vorzusehen.

Der Erfindung liegt die Aufgabe zugrunde, bei einem Reifen der eingangs genannten Art an eine Profilstruktur mit Schrägrillen mit zwei Rillenabschnitten besonders gut abgestimmte Maßnahmen zu setzen, um einen besonders gleichmäßigen Abrieb zu erzielen.

Gelöst wird die gestellte Aufgabe erfindungsgemäß dadurch, dass die zweiten Rillenabschnitte Erstreckungslängen aufweisen, die mit den Umfangslängen der Pichtes korrelieren und die, beginnend bei ihren freien Enden, eine über ihre gesamte Erstreckung gleichmäßig zunehmende Tiefe aufweisen, wobei die Tiefe an ihren freien Enden am geringsten ist und die Zunahme der Tiefe innerhalb der Pitches mit der kleinsten Umfangslänge am geringsten und innerhalb der Pitches mit der größten Umfangslänge am größten ist und von der kleinsten bis zur größten Umfangslänge schrittweise zunimmt.

Gemäß der Erfindung lässt sich auf eine besonders Ziel führende und wirkungsvolle Weise eine Änderung der Gummivolumina in den blockartigen Profilstrukturen der unterschiedlichen Pitches in Richtung zu gleich großen Gummivolumina erreichen, sodass die Steifigkeiten der blockartigen Profilstrukturen aneinander angeglichen sind und ein besonders gleichmäßiger Abrieb über den Reifenumfang erzielbar ist.

Bei einer bevorzugten Ausführung beträgt die Tiefe der zweiten Rillenabschnitte an ihren freien Enden 1,00 mm bis 1,50 mm. Durch das Ausmaß der Zunahme der Tiefe dieser Rillenabschnitte lässt sich die Steifigkeit der blockartigen Profilstrukturen besonders gut aneinander angleichen.

Die ersten Rillenabschnitte sorgen vor allem für eine gute Wasserableitung in die Umfangsrille, in welche sie einmünden. Vorteilhafterweise weisen daher die ersten Rillenabschnitte eine insbesondere konstante Tiefe auf, die entweder der vorgesehenen Profiltiefe entspricht oder um bis zu 2,00 mm geringer ist als diese.

In den Pitches mit unterschiedlichen Umfangslängen wird durch den Verlauf der Tiefe der zweiten Rillenabschnitte ein Angleichen der Steifigkeiten der blockartigen Profilstrukturen unterstützt. Dabei ist es von Vorteil, wenn die Tiefe zweiten Rillenabschnitte, welche sich in Pitches mit der kleinsten Umfangslänge befinden, an den Enden beim ersten Rillenabschnitt um 2,50 mm bis 3,50 mm geringer ist als die Tiefe des ersten Rillenabschnittes an dieser Stelle. Des Weiteren ist es von Vorteil, wenn die Tiefe der in Pitches mit der größten Umfangslänge befindlichen zweiten Rillenabschnitte an ihren Enden beim ersten Rillenabschnitt um höchstens 1,00 mm geringer ist als die Tiefe des ersten Rillenabschnittes an dieser Stelle. Sind Pitches mit drei unterschiedlichen Umfangslängen vorgesehen, ist die Tiefe der in Pitches mit der zweitgrößten Umfangslänge befindlichen zweiten Rillenabschnitte an ihren Enden beim ersten Rillenabschnitt vorteilhafterweise um 1,20 mm bis 1,70 mm geringer als die Tiefe des ersten Rillenabschnittes an dieser Stelle.

Besonders vorteilhaft sind diese Maßnahmen bei Profilrippen, die Pitches mit drei unterschiedlichen Umfangslängen aufweisen, wobei die Pitches mit der kleinsten Umfangslänge eine Umfangslänge von 60,00 mm bis 68,00 mm, die Pitches mit der zweitgrößeren Umfangslänge eine Umfangslänge vom 1,15- bis 1,25-Fachen und die Pitches mit der größten Umfangslänge eine Umfangslänge vom 1,3- bis 1,5-Fachen der kleinsten Umfangslänge aufweisen.

Für eine besonders gute Wasserdrainage durch die Schrägrillen ist es ferner von Vorteil, wenn die zweiten Rillenabschnitte eine, beginnend bei ihren freien Enden, zunehmende Breite aufweisen, wobei die Breite an den freien Enden 1,00 mm bis 1,50 mm und im Anschlussbereich zu den ersten Rillenabschnitten der Breite der ersten Rillenabschnitte an dieser Stelle entspricht.

Eine Verbesserung der Nasshaftung lässt sich dadurch erzielen, dass, gemäß einer weiteren Ausgestaltung, in den blockartigen Profilstrukturen zwischen den Schrägrillen Einschnitte ausgebildet sind, welche jeweils in die die Profilrippe laufstreifenaußenseitig begrenzende Umfangsrille einmünden, innerhalb der Profilrippe enden, eine dem Verlauf der Schrägrillen folgenden Verlauf und eine Breite von 0,60 mm bis 1,20 mm aufweisen.

Bei Ausführungen mit zumindest einer Profilrippe, deren blockartige Profilstrukturen in Pitches mit drei unterschiedlichen Umfangslängen gegliedert sind, können Anzahl und Breite der Einschnitte auf eine besonders vorteilhafte Weise an die in Umfangsrichtung unterschiedlich langen Profilstrukturen angepasst werden, um eine Angleichung der Steifigkeiten der Profilstrukturen zu unterstützen.

Gemäß einer dieser vorteilhaften Maßnahmen ist in blockartigen Profilstrukturen, welche zu den Pitches mit der kleinsten Umfangslänge gehören, jeweils ein Einschnitt und es sind in blockartigen Profilstrukturen, welche zu den Pitches mit der zweitgrößten und der größten Umfangslänge gehören, jeweils zwei Einschnitte ausgebildet.

Des Weiteren ist es in diesem Zusammenhang von Vorteil, wenn in blockartigen Profilstrukturen, welche zu den Pitches mit der kleinsten und der größten Umfangslänge gehören, Einschnitte ausgebildet sind, die eine Breite aufweisen, die um 0,10 mm bis 0,30 mm größer ist als die Breite der Einschnitte in den Pitches mit der zweitgrößten Umfangslänge.

Schließlich ist es bei Ausführungen mit Pitches mit drei unterschiedlichen Umfangslängen besonders vorteilhaft, wenn in blockartigen Profilstrukturen, welche zu den Pitches mit der kleinsten und der größten Umfangslänge gehören, Einschnitte ausgebildet sind, die eine Breite aufweisen, die 0,80 bis 1,20 mm beträgt, wobei vorzugweise die Einschnitte in den Pitches mit der kleinsten und der größten Umfangslänge übereinstimmende Breiten aufweisen. Vorzugsweise weisen ferner bei Ausführungen mit Pitches mit drei unterschiedlichen Umfangslängen die blockartige Profilstrukturen, welche zu den Pitches mit der zweitgrößten Umfangslänge gehören, Einschnitte auf, die eine Breite besitzen, die 0,60 mm bis 1,00 mm beträgt.

Bei einer alternativen Ausführung kann darüber hinaus auch vorgesehen sein, dass sämtliche Einschnitte in sämtlichen blockartigen Profilstrukturen übereinstimmende Breiten aufweisen.

Gemäß einer weiteren besonders vorteilhaften Maßnahme sind in den blockartigen Profilstrukturen weitere Einschnitte ausgebildet, welche die Enden oder die Endabschnitte zumindest einiger der zwischen den Schrägrillen verlaufenden Einschnitte mit der die mittlere Profilrippe weiter laufstreifeninnenseitig begrenzenden Umfangsrille verbinden und/oder welche vom Anschlussbereich der Rillenabschnitte der Schrägrillen ausgehend bis zu der erwähnten Umfangsrille verlaufen. Die weiteren Einschnitte verlaufen bevorzugt in axialer Richtung oder unter einem spitzen Winkel von bis zu 30°zur axialen Richtung, ferner bevorzugt geradlinig sowie mit einer Breite von 0,40 mm bis 1,20 mm, insbesondere von 0,60 mm bis 1,00 mm. Durch die weiteren Einschnitte werden die blockartigen Profilstrukturen geteilt, wodurch reduzierte Snap-in/Snap-out-Effekte in Fahrtrichtung erzielt werden und daher der Laufstreifenabrieb und das Geräuschverhalten beim Abrollen positiv beeinflusst werden. Die von den weiteren Einschnitten zur Verfügung gestellten Griffkanten können dabei zusätzlich die Nasshaftung verbessern. Bei einer bevorzugten Ausführung weisen sämtliche weitere Einschnitte übereinstimmende Breiten, insbesondere in der Größenordnung von 0,80 mm, auf.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen in die Ebene abgewickelten Umfangsabschnitt eines Laufstreifens eines Fahrzeugluftreifens,
Fig. 2 einen Schnitt entlang der Linie II-II der Fig. 1,
Fig. 3 einen Schnitt entlang der Linie III-III der Fig. 1 und
Fig. 4 einen Schnitt entlang der Linie IV-IV der Fig. 1.

Gemäß der Erfindung ausgeführte Fahrzeugluftreifen sind Reifen in Radialbauart für mehrspurige Kraftfahrzeuge, insbesondere All-Terrain-Reifen und Reifen für Personenkraftwagen, SUVs oder Vans.

In der Beschreibung beziehen sich sämtliche Dimensionsangaben auf den neuen Reifen, sämtliche Breitenangaben sind an der Laufstreifenperipherie zu ermitteln, sämtliche Tiefenangaben sind in radialer Richtung zwischen der Laufstreifenperipherie und dem Grund von Rillen oder Einschnitten zu ermitteln.

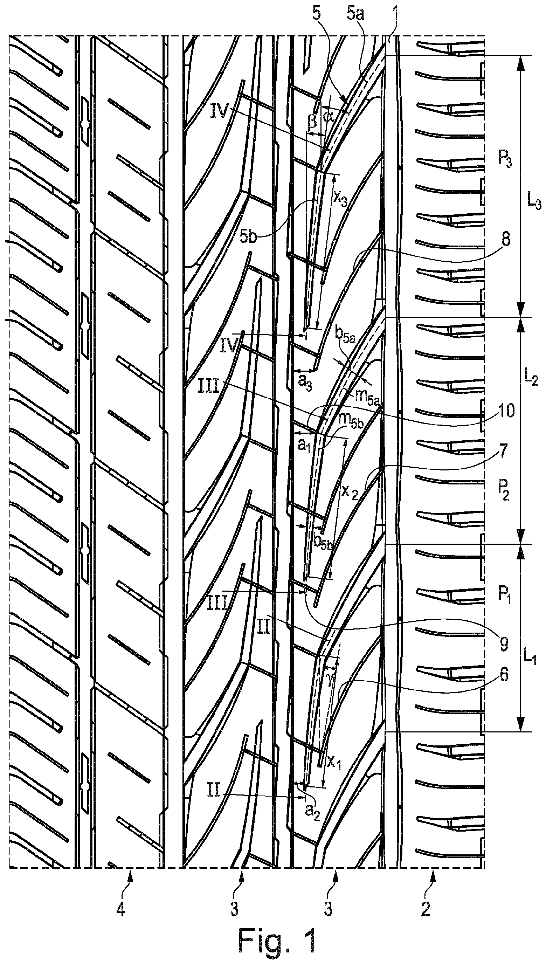

Fig. 1 zeigt einen Umfangsabschnitt eines Laufstreifens, welcher durch vier in Umfangsrichtung insbesondere gerade umlaufende Umfangsrillen 1 in zwei schulterseitige Profilrippen 2, die zum Teil dargestellt sind, und in zwei mittlere Profilrippen 3 sowie eine mittlere Profilrippe 4 gegliedert ist. Die Umfangsrillen 1 weisen, insbesondere abgesehen von Abschnitten mit Treadwear-Indikatoren, Schallbrechern und dgl., eine der vorgesehenen Profiltiefe entsprechende Tiefe auf, die bei den die oben erwähnten Reifentypen üblicherweise 6,50 mm bis 13,00 mm beträgt. Die beiden mittleren Profilrippen 3 sind gemäß der Erfindung mit einer besonderen Profilstruktur versehen. Eine dieser beiden mittleren Profilrippen 3 verläuft entlang der durch eine Linie A-A gekennzeichneten Reifenäquatorialebene, die zweite mittlere Profilrippe 3 befindet sich zwischen dieser Profilrippe 3 und einer schulterseitigen Profilrippe 2.

Auf die Ausgestaltung der beiden schulterseitigen Profilrippen 2 sowie der mittleren Profilrippe 4 wird nicht näher eingegangen, diese Profilrippen 2, 4 können in an sich bekannter Weise mit Rillen, insbesondere Querrillen, mit Quereinschnitten und dergleichen strukturiert sein.

Die beiden mittleren Profilrippen 3 sind bezüglich ihrer strukturellen Gestaltung gleich ausgeführt, wobei die Profilstrukturen in der einen mittleren Profilrippe 3 gegenüber jenen in der zweiten mittleren Profilrippe 3 um 180° drehsymmetrisch verlaufen.

Die mittleren Profilrippen 3 sind durch Schrägrillen 5 in blockartige Profilstrukturen gegliedert. Die Schrägrillen setzen sich, beginnend bei den die mittleren Profilrippen 3 laufstreifenaußenseitig begrenzenden Umfangsrillen 1, aus einem ersten Rillenabschnitt 5a und einem zweiten Rillenabschnitt 5b zusammen.

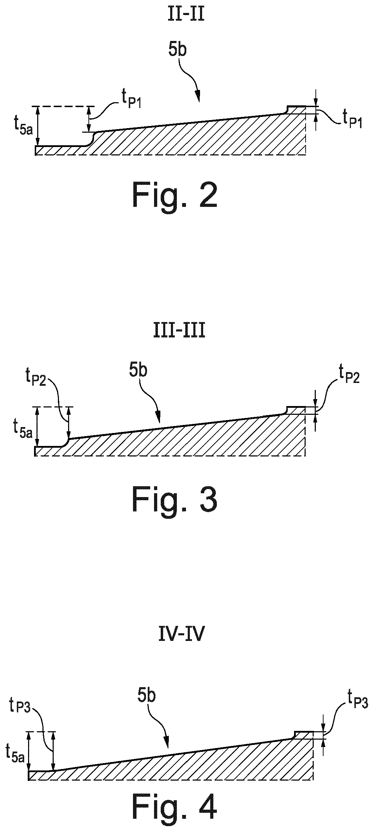

Der erste Rillenabschnitt 5a verläuft, bezogen auf seine Mittellinie msa, unter einem Winkel α von 25° bis 40°, insbesondere von 27° bis 32°, relativ zur Umfangsrichtung. Der Rillenabschnitt 5a kann gerade verlaufen oder, wie es in Fig. 1 gezeigt ist, insgesamt und durchgehend leicht bogenförmig, sodass sich der Winkel α beginnend beim inneren Ende bis zur Einmündung in die Umfangsrille 1 kontinuierlich und geringfügig um bis zu 5° vergrößert. Der Rillenabschnitt 5a endet
in einem in axialer Richtung ermittelten Abstand a₁ von 6,00 mm bis 10,00 mm zur Umfangsrille 1, welche die beiden mittleren Profilrippen 3 voneinander trennt. Der Abstand a₁ wird zwischen jener Randkante am Ende des Rillenabschnittes 5a, welche der Umfangsrille 1 benachbart ist, und der Randkante der Umfangsrille 1 ermittelt. Der Rillenabschnitt 5a weist ferner eine Breite bsa auf, die zwischen dem innerhalb der Profilrippe 3 befindlichen Ende des Rillenabschnittes 5a und der Einmündung in die Umfangsrille 1 kontinuierlich zunimmt. Senkrecht zur Mittellinie m₅ₐ beträgt die Breite b₅ₐ am inneren Ende des Rillenabschnitts 5a 3,00 mm bis 5,00 mm, beim Mündungsbereich in die Umfangsrille 4,00 mm bis 6,00 mm. Der Rillenabschnitt 5a weist eine Tiefe t₅ₐ (Fig. 2 bis Fig. 4) auf, die bevorzugt der vorgesehenen Profiltiefe entspricht.

Die Rillenabschnitte 5b verlaufen, auf ihre Mittellinien m_{5b} bezogen, unter einem Winkel β relativ zur Umfangsrichtung, der 2° bis 15° beträgt, insbesondere 5° bis 10°, wobei die Rillenabschnitte 5b relativ zur Umfangsrichtung gleichsinnig zu den Rillenabschnitten 5a geneigt verlaufen. Die Rillenabschnitte 5b verlaufen entweder geradlinig oder durchgehend leicht gebogen, wobei sich der Winkel β, ausgehend vom weiter innen in der Profilrippe 3 befindlichen Ende der Rillenabschnitte 5b bis zu ihren Enden bei den Rillenabschnitten 5a geringfügig und kontinuierlich um bis zu 10° vergrößert. Die innerhalb der Profilrippen 3 befindlichen freien Enden der Rillenabschnitte 5b befinden sich in einem Abstand a₂ von 3,00 mm bis 6,00 mm zur zwischen den beiden Profilrippen 5a, 5b befindlichen Umfangsrille 1, wobei der Abstand a₂ analog zum Abstand a₁ in axialer Richtung und zwischen den Randkanten der Umfangsrille 1 und des Rillenabschnittes 5b ermittelt wird. Die Rillenabschnitte 5b weisen eine, beginnend bei ihren freien Enden, zunehmende Breite 5bs auf, wobei die Breite b_{5b} an den freien Enden 1,00 mm bis 2,00 mm und im Anschlussbereich zu den ersten Rillenabschnitten 5a der Breite bsa der ersten Rillenabschnitte 5a an dieser Stelle entspricht.

Die blockartigen Profilstrukturen in den beiden mittleren Profilrippen 3 sind, insbesondere gemeinsam mit den Profilstrukturen der weiteren Profilrippen 2, 4 des Laufstreifens, und wie es üblich ist, zur Optimierung des Abrollgeräusches gemäß einem Verfahren der Pitch-Längenvariation angeordnet. Die blockartigen Profilstrukturen bilden sogenannte Pitches, wobei beim dargestellten Laufstreifen zumindest die Profilstrukturen in den mittleren Profilrippen 3 aus drei unterschiedlichen Pitches P₁, P₂ und P₃ zusammengesetzt sind. Anstelle von drei unterschiedlichen Pitches können auch vier oder fünf unterschiedlichen Pitches vorgesehen sein. Über den Reifenumfang betrachtet setzt sich beim gezeigten Ausführungsbeispiel jede mittlere Profilrippe 3 aus einer Vielzahl von Pitches P₁, einer Vielzahl von Pitches P₂ und einer Vielzahl von Pitches P₃ zusammen, deren für das Abrollgeräusch möglichst günstigste Aufeinanderfolge, die Pitchfolge, rechnerisch ermittelt wird. Dabei können in der Pitchfolge an manchen Stellen des Reifenumfangs zwei oder mehr Pitches P₁, P₂ oder P₃ unmittelbar aufeinanderfolgen.

Die Gliederung in die Pitches P₁, P₂ und P₃ erfolgt daher in jeder mittleren Profilrippe 3 durch die Schrägrillen 5 an Pitchgrenzen, die im Beispiel entlang der Mittellinien m₅ₐ der Rillenabschnitte 5a verlaufen, und mit Umfangslängen L₁ (Pitch P₁), L₂ (Pitch P₂) und L₃ (Pitch P₃), die zwischen den Enden der Mittellinien m₅ₐ bei der Umfangrille 1 der Rillenabschnitte 5a ermittelt sind. Die Länge L₁ beträgt 60,00 mm bis 68,00 mm, die Länge L₂ ist um das 1,15- bis 1,25-Fache länger als die Länge L₁, die Länge L₃ ist um das 1,3- bis 1,5-Fache länger als die Länge L₁.

Die Rillenabschnitte 5b weisen Erstreckungslängen x₁, x₂ und x₃ auf, welche mit den Pitchlängen L₁, L₂ und L₃ korrelieren. Die Erstreckungslänge x₁ der Rillenabschnitte 5b beträgt in einem Pitch P₁ 40,00 mm bis 50,00 mm, in einem Pitch P₂ beträgt die Länge x₂ das 1,15- bis 1,25-Fache der Länge x₁, in einem Pitch P₃ beträgt die Erstreckungslänge x₃ das 1,3- bis 1,5-Fache der Erstreckungslänge x₁. Darüber hinaus weisen die Rillenabschnitte 5b in den einzelnen Pitches P₁, P₂ und P₃ eine auf unterschiedliche Weise über ihre Erstreckung variierende Tiefe t_{P1}, t_{P2} und t_{P3} auf. In sämtlichen Rillenabschnitten 5b sind die Tiefen t_{P1}, t_{P2} und t_{P3} an den freien Enden am geringsten und betragen dort 1,00 mm bis 1,50 mm. In sämtlichen Rillenabschnitten 5b können die Tiefen t_{P1}, t_{P2} und t_{P3} an den freien Enden gleich groß sein. Ausgehend von ihren freien Enden mit den geringsten Tiefen t_{P1}, t_{P2} und tps werden die Tiefen t_{P1}, t_{P2} und tps bis zu den zweiten Enden der Rillenabschnitte 5b gleichmäßig (linear) größer, wie in den Schnitten in Fig. 2, Fig. 3 und Fig. 4 gezeigt ist. Die Tiefe t_{P1} der in einem Pitch P₁ befindlichen Rillenabschnitte 5b an ihren zweiten, beim Rillenabschnitt 5a befindlichen Enden ist um 2,50 mm bis 3,50 mm geringer ist als die Tiefe t₁ des Rillenabschnitts 5a. In einem Pitch P₂ beträgt diese Tiefendifferenz 1,20 bis 1,70 mm, in einem Pitch P₃ ≤ 1,00 mm. Die Zunahme der Tiefe t_{P1} ist daher in einem Pitch P₁ am geringsten, in einem Pitch P₃ am größten. Wie insbesondere die Schnittdarstellungen in Fig. 2 und Fig. 3 zeigen, erfolgt der Übergang von den Rillenabschnitten 5b in die Rillenabschnitte 5a über Übergangsflanken mit einem gerundeten Übergang in den Rillengrund der Rillenabschnitte 5a.

Innerhalb der blockartigen Profilstrukturen sind zusätzlich Einschnitte 6, 7 und 8 ausgebildet, welche parallel bzw. im Wesentlichen parallel zu den Rillenabschnitten 5a verlaufen. In jedem Pitch P₁ ist im mittleren Bereich zwischen den beiden Schrägrillen 5 jeweils ein Einschnitt 6 ausgebildet, in den Pitches P₂ und P₃ befinden sich jeweils zwei Einschnitte 7 (Pitch P₂) bzw. 8 (Pitch P₃). Die Anordnung der Einschnitte 7 und 8 ist derart, dass sie zueinander und zu den Rillenabschnitten 5a weitgehend gleich große Abstände aufweisen.

Sämtliche Einschnitte 6, 7 und 8 münden in die die Profilrippen 3 laufstreifenaußenseitig begrenzenden Umfangsrillen 1 und enden innerhalb der Profilrippen 3 in einem in axialer Richtung ermittelten Abstand a₃ von 7,00 mm bis 12,0 mm zur Umfangsrille 1 zwischen den beiden Profilrippen 3. Sämtliche Einschnitte 6, 7, 8 verlaufen ferner durchgehend leicht bogenförmig, im Bereich ihrer innerhalb der mittleren Profilrippen 3 befindlichen Enden bzw. Endabschnitte verlaufen sie relativ zur Umfangsrichtung unter einem Winkel γ von 10° bis 20°, der Winkel γ vergrößert sich bis zum Einmündungsbereich in die Umfangsrille 1 auf 30° bis 40°. Die Einschnitte 6, 7 und 8 weisen eine Tiefe auf, die zumindest abschnittsweise geringer ist als die Profiltiefe.

Der Einschnitt 6 in den Pitches P₁ und die Einschnitte 8 in den Pitches P₃ weisen eine Breite auf, die 0,80 mm bis 1,20 mm beträgt, die Einschnitte 7 in den Pitches P₂ weisen eine Breite von 0,60 mm bis 1,00 mm auf. Dabei ist die Breite der Einschnitte 6 in den Pitches P₁ und der Einschnitte 8 in den Pitches P₃ um 0,10 mm bis 0,30 mm größer als die Breite der Einschnitte in den Pitches P₁. Bevorzugt weisen innerhalb sämtlicher Pitches P₁, P₂ und P₃ die dort vorgesehenen Einschnitte 6, 7, 8 jeweils übereinstimmende und insbesondere auch über ihre Erstreckung jeweils konstante Breiten auf. Bei einer bevorzugten Ausführung beträgt die Breite der Einschnitte 6 und 8 1,00 mm, jene der Einschnitte 7 0,80 mm.

Wie Fig 1 zeigt können weitere kurze Einschnitte 9, vorgesehen sein, welche die Enden oder die Endabschnitte der Einschnitte 6, 7 und/oder 8 mit der zwischen den beiden mittleren Profilrippen 3 verlaufenden Umfangsrille 1 verbinden. Weitere Einschnitte 10 können vom Anschlussbereich der beiden Rillenabschnitte 5a, 5b ausgehend bis zu dieser Umfangsrille 1 verlaufen. Diese weiteren Einschnitte verlaufen dabei unter einem spitzen Winkel von bis zu 30° zur axialen Richtung, vorzugsweise geradlinig und besitzen eine Breite von 0,40 mm bis 1,20 mm, insbesondere 0,60 bis 1,00 mm.

### Bezugszeichenliste

- 1: Umfangsrille
- 2: schulterseitige Profilrippe
- 3, 4: mittlere Profilrippe
- 5: Schrägrille
- 5a, 5b: Rillenabschnitt
- 6, 7, 8: Einschnitt
- 9, 10: Einschnitt
- a₁, a₂, a₃: Abstand
- b₅ₐ, b_{5b}: Breite
- α, β, γ: Winkel
- x₁, x₂, x₃: Erstreckungslänge
- L₁, L₂, L₃: Umfangslängen
- m₅ₐ, m_{5b}: Mittellinie
- P₁, P₂, P₃: Pitches
- t₅ₐ: Tiefe
- t_{P1}, t_{P2}, t_{P3}: Tiefe

## Patentansprüche

1. Fahrzeugluftreifen mit einem Laufstreifen, welcher durch Umfangsrillen (1) in schulterseitige Profilrippen (2) und mittlere Profilrippen (3, 4) gegliedert ist, wobei zumindest eine der mittleren Profilrippen (3) durch Schrägrillen (5) in blockartige Profilstrukturen gegliedert sind,
wobei die Schrägrillen (5) jeweils einen ersten Rillenabschnitt (5a), welcher in die die Profilrippe (3) weiter laufstreifenaußenseitig begrenzende Umfangsrille (1) einmündet und unter einem Winkel (α) von 25° bis 40° zur Umfangsrichtung verläuft, und einen zweiten Rillenabschnitt (5a) aufweisen, welcher an den ersten Rillenabschnitt (5a) anschließt, innerhalb der Profilrippe (3) frei endet und unter einem Winkel (β) von 2° bis 15 °zur Umfangsrichtung verläuft,
**dadurch gekennzeichnet,**
**dass** die blockartigen Profilstrukturen Pitches (P₁, P₂, P₃) mit drei bis fünf unterschiedlichen Umfangslängen (L₁, L₂, L₃) bilden,
**dass** die zweiten Rillenabschnitte (5b) Erstreckungslängen (x₁, x₂, x₃) aufweisen, die mit den Umfangslängen (L₁, L₂, L₃) der Pitches (P₁, P₂, P₃) korrelieren und, beginnend bei ihren freien Enden, eine über ihre gesamte Erstreckung gleichmäßig zunehmende Tiefe (t_{P1}, t_{P2}, t_{P3}) aufweisen, wobei die Tiefe an ihren freien Enden am geringsten ist und die Zunahme der Tiefen (t_{P1}, t_{P2}, t_{P3}) innerhalb der Pitches (P₁) mit der kleinsten Umfangslänge (L₁) am geringsten und innerhalb der Pitches (P₃) mit der größten Umfangslänge (L₃) am größten ist und von der kleinsten bis zur größten Umfangslänge schrittweise zunimmt.

2. Fahrzeugluftreifen nach Anspruch 1, **dadurch gekennzeichnet, dass** die Tiefe (t_{P1}, t_{P2}, t_{P3}) der zweiten Rillenabschnitte (5b) an ihren freien Enden 1,00 mm bis 1,50 mm beträgt.

3. Fahrzeugluftreifen nach Anspruch 1 oder 2, **dadurch gekennzeichnet, dass** der erste Rillenabschnitt (5a) eine insbesondere konstante Tiefe (tsa) aufweist, die der vorgesehenen Profiltiefe entspricht oder um bis zu 2,00 mm geringer ist als diese.

4. Fahrzeugluftreifen nach einem der Ansprüche 1 bis 3, **dadurch gekennzeichnet, dass** die Tiefe (t_{P1}) der in Pitches (P₁) mit der kleinsten Umfangslänge (L₁) befindlichen zweiten Rillenabschnitte (5b) an ihren Enden beim ersten Rillenabschnitt (5a) um 2,50 mm bis 3,50 mm geringer ist als die Tiefe (tsa) des ersten Rillenabschnittes (5a) an dieser Stelle.

5. Fahrzeugluftreifen nach einem der Ansprüche 1 bis 4, **dadurch gekennzeichnet, dass** die Tiefe (t_{P3}) der in Pitches (P₃) mit der größten Umfangslänge (L₃) befindlichen zweiten Rillenabschnitte (5b) an ihren Enden beim ersten Rillenabschnitt (5a) um höchstens 1,00 mm geringer ist als die Tiefe (tsa) des ersten Rillenabschnittes (5a) an dieser Stelle.

6. Fahrzeugluftreifen nach einem der Ansprüche 1 bis 5, **dadurch gekennzeichnet, dass**, wenn Pitches (P₁, P₂, P₃) mit drei unterschiedlichen Umfangslängen (L₁, L₂, L₃) vorgesehen sind, die Tiefe (t_{P2}) der in Pitches (P₂) mit der zweitgrößten Umfangslänge befindlichen zweiten Rillenabschnitte (5b) an ihren Enden beim ersten Rillenabschnitt (5a) um 1,20 mm bis 1,70 mm geringer ist als die Tiefe (tsa) des ersten Rillenabschnittes (5a) an dieser Stelle.

7. Fahrzeugluftreifen nach einem der Ansprüche 1 bis 6, **dadurch gekennzeichnet, dass**, wenn Pitches (P₁, P₂, P₃) mit drei unterschiedlichen Umfangslängen (L₁, L₂, L₃) vorgesehen sind, die Pitches (P₁) mit der kleinsten Umfangslänge (L₁) eine Umfangslänge von 60,00 mm bis 68,00 mm, die Pitches (P₂) mit der zweitgrößeren Umfangslänge (L₂) eine Umfangslänge vom 1,15- bis 1,25-Fachen und die Pitches (P₃) mit der größten Umfangslänge (L₃) eine Umfangslänge vom 1,3- bis 1,5-Fachen der kleinsten Umfangslänge (L₁) aufweisen.

8. Fahrzeugluftreifen nach einem der Ansprüche 1 bis 7, **dadurch gekennzeichnet, dass** die zweiten Rillenabschnitte (5b) eine, beginnend bei ihren freien Enden, zunehmende Breite (b_{5b}) aufweisen, wobei die Breite (b_{5b}) an den freien Enden 1,00 mm bis 1,50 mm und im Anschlussbereich zu den ersten Rillenabschnitten (5a) der Breite (b₅ₐ) der ersten Rillenabschnitte (5a) an dieser Stelle entspricht.

9. Fahrzeugluftreifen nach einem der Ansprüche 1 bis 8, **dadurch gekennzeichnet, dass** in den blockartigen Profilstrukturen zwischen den Schrägrillen (5) Einschnitte (6, 7, 8) ausgebildet sind, welche jeweils in die die Profilrippe (3) laufstreifenaußenseitig begrenzende Umfangsrille (1) einmünden, innerhalb der Profilrippe (3) enden, einen dem Verlauf der Schrägrillen (5) folgenden Verlauf und eine Breite von 0,60 mm bis 1,20 mm aufweisen.

10. Fahrzeugluftreifen nach einem der Ansprüche 1 bis 9, **dadurch gekennzeichnet, dass**, wenn Pitches (P₁, P₂, P₃) mit drei unterschiedlichen Umfangslängen (L₁, L₂, L₃) vorgesehen sind, in blockartigen Profilstrukturen, welche zu den Pitches (P₁) mit der kleinsten Umfangslänge (L₁) gehören, jeweils ein Einschnitt (6) und in den blockartige Profilstrukturen, welche zu den Pitches (P₂, P₃) mit der zweitgrößten und der größten Umfangslänge (L₂, L₃) gehören, jeweils zwei Einschnitte (7, 8) ausgebildet ist bzw. sind.

11. Fahrzeugluftreifen nach einem der Ansprüche 1 bis 10, **dadurch gekennzeichnet, dass**, wenn Pitches (P₁, P₂, P₃) mit drei unterschiedlichen Umfangslängen (L₁, L₂, L₃) vorgesehen sind, in blockartigen Profilstrukturen, welche zu den Pitches (P₁, P₃) mit der kleinsten und der größten Umfangslänge (L₁, L₂) gehören, Einschnitte (6, 8) ausgebildet sind, die eine Breite aufweisen, die um 0,10 mm bis 0,30 mm größer ist als die Breite der Einschnitte (7) in den Pitches (P₂) mit der zweitgrößten Umfangslänge (L₂).

12. Fahrzeugluftreifen nach einem der Ansprüche 1 bis 11, **dadurch gekennzeichnet, dass**, wenn Pitches (P₁, P₂, P₃) mit drei unterschiedlichen Umfangslängen (L₁, L₂, L₃) vorgesehen sind, in blockartigen Profilstrukturen, welche zu den Pitches (P₁, P₃) mit der kleinsten und der größten Umfangslänge (L₁, L₂) gehören, Einschnitte (6, 8) ausgebildet sind, die eine Breite aufweisen, die 0,80 mm bis 1,20 mm beträgt, wobei vorzugsweise die Einschnitte (6, 8) in den Pitches (P₁, P₃) mit der kleinsten und der größten Umfangslänge (L₁, L₃) übereinstimmende Breiten aufweisen.

13. Fahrzeugluftreifen nach einem der Ansprüche 1 bis 12, **dadurch gekennzeichnet, dass**, wenn Pitches (P₁, P₂, P₃) mit drei unterschiedlichen Umfangslängen (L₁, L₂, L₃) vorgesehen sind, in blockartigen Profilstrukturen, welche zu den Pitches (P₂) mit der zweitgrößten Umfangslänge (L₂) gehören, Einschnitte (7) ausgebildet sind, die eine Breite aufweisen, die 0,60 mm bis 1,00 mm beträgt.

14. Fahrzeugluftreifen nach einem der Ansprüche 1 bis 13, **dadurch gekennzeichnet, dass** weitere Einschnitte (9, 10) vorgesehen sind, welche die Enden oder die Endabschnitte zumindest einiger der zwischen den Schrägrillen (5) verlaufenden Einschnitte (6, 7, 8, 8`) mit der die mittlere Profilrippe (3) weiter laufstreifeninnenseitig begrenzenden Umfangsrille (1) verbinden und/oder welche vom Anschlussbereich der Rillenabschnitte (5a, 5b) der Schrägrillen (5) ausgehend bis zu der erwähnten Umfangsrille (1) verlaufen.

15. Fahrzeugluftreifen nach Anspruch 14, **dadurch gekennzeichnet, dass** die weiteren Einschnitte (9, 10) unter einem spitzen Winkel von bis zu 30° zur axialen Richtung und vorzugsweise geradlinig verlaufen sowie eine Breite von 0,40 mm bis 1,20 mm, insbesondere von 0,60 mm bis 1,00 mm, aufweisen.

## Claims

1. Pneumatic vehicle tyre having a tread which is divided into shoulder-side profile ribs (2) and central profile ribs (3, 4) by circumferential grooves (1), wherein
at least one of the central profile ribs (3) is divided into block-type profile structures by oblique grooves (5),
wherein the oblique grooves (5) have in each case a first groove portion (5a) which opens into the circumferential groove (1) that delimits the profile rib (3) further outside on the tread and which runs at an angle (α) of 25° to 40° in relation to the circumferential direction, and a second groove portion (5b) which adjoins the first groove portion (5a), terminates freely within the profile rib (3) and runs at an angle (β) of 2° to 15° in relation to the circumferential direction,
**characterized in**
**that** the block-type profile structures form pitches (P₁, P₂, P₃) with three to five different circumferential lengths (L₁, L₂, L₃);
**that** the second groove portions (5b) have lengths of extent (x₁, x₂, x₃) which correlate with the circumferential lengths (L₁, L₂, L₃) of the pitches (P₁, P₂, P₃) and, proceeding from their free ends, have a depth (t_{P1}, t_{P2}, t_{P3}) that increases uniformly over their entire extent, wherein the depth is smallest at their free ends, and the increase in the depths (t_{P1}, t_{P2}, t_{P3}) is the smallest within the pitches (P₁) with the smallest circumferential length (L₁) and is the largest within the pitches (P₃) with the largest circumferential length (L₃), increasing incrementally from the smallest to the largest circumferential length.

2. Pneumatic vehicle tyre according to Claim 1, **characterized in that** the depth (t_{P1}, t_{P2}, t_{P3}) of the second groove portions (5b) at their free ends is 1.00 mm to 1.50 mm.

3. Pneumatic vehicle tyre according to Claim 1 or 2, **characterized in that** the first groove portion (5a) has an in particular constant depth (t₅ₐ) which corresponds to the provided profile depth or is up to 2.00 mm smaller than the latter.

4. Pneumatic vehicle tyre according to one of Claims 1 to 3, **characterized in that** the depth (t_{P1}) of the second groove portions (5b) situated in pitches (P₁) with the smallest circumferential length (L₁) at their ends at the first groove portion (5a) is 2.50 mm to 3.50 mm smaller than the depth (t₅ₐ) of the first groove portion (5a) at this location.

5. Pneumatic vehicle tyre according to one of Claims 1 to 4, **characterized in that** the depth (t_{P3}) of the second groove portions (5b) situated in pitches (P₃) with the largest circumferential length (L₃) at their ends at the first groove portion (5a) is at most 1.00 mm smaller than the depth (t₅ₐ) of the first groove portion (5a) at this location.

6. Pneumatic vehicle tyre according to one of Claims 1 to 5, **characterized in that**, if pitches (P₁, P₂, P₃) with three different circumferential lengths (L₁, L₂, L₃) are provided, the depth (t_{P2}) of the second groove portions (5b) situated in pitches (P₂) with the second largest circumferential length at their ends at the first groove portion (5a) is 1.20 mm to 1.70 mm smaller than the depth (tsa) of the first groove portion (5a) at this location.

7. Pneumatic vehicle tyre according to one of Claims 1 to 6, **characterized in that**, if pitches (P₁, P₂, P₃) with three different circumferential lengths (L₁, L₂, L₃) are provided, the pitches (P₁) with the smallest circumferential length (L₁) have a circumferential length of 60.00 mm to 68.00 mm, the pitches (P₂) with the second larger circumferential length (L₂) have a circumferential length of 1.15 to 1.25 times, and the pitches (P₃) with the largest circumferential length (L₃) have a circumferential length of 1.3 to 1.5 times, the smallest circumferential length (L₁).

8. Pneumatic vehicle tyre according to one of Claims 1 to 7, **characterized in that** the second groove portions (5b), proceeding from their free ends, have an increasing width (b_{5b}), wherein the width (b_{5b}) at the free ends is 1.00 to 1.50 mm, and in the connecting region to the first groove portions (5a) corresponds to the width (b₅ₐ) of the first groove portions (5a) at this location.

9. Pneumatic vehicle tyre according to one of Claims 1 to 8, **characterized in that** formed in the block-type profile structures between the oblique grooves (5) are sipes (6, 7, 8) which in each case open into the circumferential groove (1) that delimits the profile rib (3) on the outside of the tread, terminate within the profile rib (3), have a profile following the profile of the oblique grooves (5), and have a width of 0.60 mm to 1.20 mm.

10. Pneumatic vehicle tyre according to one of Claims 1 to 9, **characterized in that**, if pitches (P₁, P₂, P₃) with three different circumferential lengths (L₁, L₂, L₃) are provided, one sipe (6) is in each case formed in block-type profile structures that are associated with the pitches (P₁) with the smallest circumferential length (L₁), and two sipes (7, 8) are in each case formed in the block-type profile structures that are associated with the pitches (P₂, P₃) with the second largest and the largest circumferential length (L₂, L₃).

11. Pneumatic vehicle tyre according to one of Claims 1 to 10, **characterized in that**, if pitches (P₁, P₂, P₃) with three different circumferential lengths (L₁, L₂, L₃) are provided, sipes (6, 8) which have a width that is 0.10 mm to 0.30 mm larger than the width of the sipes (7) in the pitches (P₂) with the second largest circumferential length (L₂) are formed in block-type profile structures that are associated with the pitches (P₁, P₃) with the smallest and the largest circumferential length (L₁, L₂).

12. Pneumatic vehicle tyre according to one of Claims 1 to 11, **characterized in that**, if pitches (P₁, P₂, P₃) with three different circumferential lengths (L₁, L₂, L₃) are provided, sipes (6, 8) which have a width that is 0.80 mm to 1.20 mm are formed in block-type profile structures that are associated with the pitches (P₁, P₃) with the smallest and the largest circumferential length (L₁, L₂), wherein the sipes (6, 8) in the pitches (P₁, P₃) with the smallest and the largest circumferential length (L₁, L₃) preferably have identical widths.

13. Pneumatic vehicle tyre according to one of Claims 1 to 12, **characterized in that**, if pitches (P₁, P₂, P₃) with three different circumferential lengths (L₁, L₂, L₃) are provided, sipes (7) which have a width that is 0.60 mm to 1.00 mm are formed in block-type profile structures that are associated with the pitches (P₂) with the second largest circumferential length (L₂).

14. Pneumatic vehicle tyre according to one of Claims 1 to 13, **characterized in that** further sipes (9, 10) which connect the ends or the end portions of at least some of the sipes (6, 7, 8, 8`) running between the oblique grooves (5) to the circumferential groove (1) delimiting the central profile rib (3) further inside the tread and/or which, proceeding from the connecting region of the groove portions (5a, 5b) of the oblique grooves (5), run to said circumferential groove (1), are provided.

15. Pneumatic vehicle tyre according to Claim 14, **characterized in that** the further sipes (9, 10) run preferably in a rectilinear manner and at an acute angle of up to 30° in relation to the axial direction, and have a width of 0.40 mm to 1.20 mm, in particular of 0.60 m to 1.00 mm.

## Revendications

1. Pneumatique de véhicule avec une bande de roulement qui est divisée par des rainures circonférentielles (1) en nervures de profil (2) côté épaulement et en nervures de profil centrales (3, 4),
au moins une des nervures de profil centrales (3) étant divisée en structures de profil de type bloc par des rainures obliques (5),
les rainures obliques (5) présentant chacune une première section de rainure (5a) qui débouche dans la rainure circonférentielle (1) délimitant la nervure de profil (3) plus loin du côté extérieur de la bande de roulement et s'étend selon un angle (α) de 25° à 40° par rapport à la direction circonférentielle, et une deuxième section de rainure (5a) qui se raccorde à la première section de rainure (5a), se termine librement à l'intérieur de la nervure de profil (3) et s'étend selon un angle (β) de 2° à 15° par rapport à la direction circonférentielle,
**caractérisé en ce que**
les structures de profils de type bloc forment des pas (P₁, P₂, P₃) ayant trois à cinq longueurs circonférentielles différentes (L₁, L₂, L₃),
les deuxièmes sections de rainure (5b) présentent des longueurs d'extension (x₁, x₂, x₃) qui sont en corrélation avec les longueurs circonférentielles (L₁, L₂, L₃) des pas (P₁, P₂, P₃) et présentent, en commençant à leurs extrémités libres, une profondeur (t_{P1}, t_{P2}, t_{P3}) qui augmente uniformément sur toute leur extension, la profondeur étant la plus faible à leurs extrémités libres, et l'augmentation des profondeurs (t_{P1}, t_{P2}, t_{P3}) étant la plus faible à l'intérieur des pas (P₁) ayant la plus petite longueur circonférentielle (L₁) et la plus grande à l'intérieur des pas (P₃) ayant la plus grande longueur circonférentielle (L₃), et augmentant progressivement de la plus petite à la plus grande longueur circonférentielle.

2. Pneumatique de véhicule selon la revendication 1, **caractérisé en ce que** la profondeur (t_{P1}, t_{P2}, t_{P3}) des deuxièmes sections de rainure (5b) à leurs extrémités libres est de 1,00 mm à 1,50 mm.

3. Pneumatique de véhicule selon la revendication 1 ou 2, **caractérisé en ce que** la première section de rainure (5a) présente une profondeur (t₅ₐ), notamment constante, qui correspond à la profondeur de profil prévue ou qui est inférieure à celle-ci de jusqu'à 2,00 mm.

4. Pneumatique de véhicule selon l'une quelconque des revendications 1 à 3, **caractérisé en ce que** la profondeur (t_{P1}) des deuxièmes sections de rainure (5b) se trouvant dans des pas (P₁) ayant la plus petite longueur circonférentielle (L₁) à leurs extrémités au niveau de la première section de rainure (5a) est inférieure de 2,50 mm à 3,50 mm à la profondeur (t₅ₐ) de la première section de rainure (5a) à cet emplacement.

5. Pneumatique de véhicule selon l'une quelconque des revendications 1 à 4, **caractérisé en ce que** la profondeur (t_{P3}) des deuxièmes sections de rainure (5b) se trouvant dans des pas (P₃) ayant la plus grande longueur circonférentielle (L₃) à leurs extrémités au niveau de la première section de rainure (5a) est inférieure d'au plus 1,00 mm à la profondeur (t₅ₐ) de la première section de rainure (5a) à cet emplacement.

6. Pneumatique de véhicule selon l'une quelconque des revendications 1 à 5, **caractérisé en ce que**, lorsque des pas (P₁, P₂, P₃) ayant trois longueurs circonférentielles différentes (L₁, L₂, L₃) sont prévus, la profondeur (t_{P2}) des deuxièmes sections de rainure (5b) se trouvant dans des pas (P₂) ayant la deuxième plus grande longueur circonférentielle est inférieure, à leurs extrémités, au niveau de la première section de rainure (5a), de 1,20 mm à 1,70 mm à la profondeur (t₅ₐ) de la première section de rainure (5a) à cet emplacement.

7. Pneumatique de véhicule selon l'une quelconque des revendications 1 à 6, **caractérisé en ce que**, lorsque des pas (P₁, P₂, P₃) ayant trois longueurs circonférentielles différentes (L₁, L₂, L₃) sont prévus, les pas (P₁) ayant la plus petite longueur circonférentielle (L₁) présentent une longueur circonférentielle de 60,00 mm à 68,00 mm, les pas (P₂) ayant la deuxième plus grande longueur circonférentielle (L₂) présentent une longueur circonférentielle de 1,15 à 1,25 fois et les pas (P₃) ayant la plus grande longueur circonférentielle (L₃) présentent une longueur circonférentielle de 1,3 à 1,5 fois la plus petite longueur circonférentielle (L₁).

8. Pneumatique de véhicule selon l'une quelconque des revendications 1 à 7, **caractérisé en ce que** les deuxièmes sections de rainure (5b) présentent une largeur (b_{5b}) qui augmente en commençant à leurs extrémités libres, la largeur (b_{5b}) aux extrémités libres étant de 1,00 mm à 1,50 mm et dans la zone de raccordement aux premières sections de rainure (5a) correspondant à la largeur (b₅ₐ) des premières sections de rainure (5a) à cet emplacement.

9. Pneumatique de véhicule selon l'une quelconque des revendications 1 à 8, **caractérisé en ce que** des entailles (6, 7, 8) sont réalisées dans les structures de profil de type bloc entre les rainures obliques (5), lesquelles entailles débouchent respectivement dans la rainure circonférentielle (1) délimitant la nervure de profil (3) du côté extérieur de la bande de roulement, se terminent à l'intérieur de la nervure de profil (3), présentent un tracé suivant le tracé des rainures obliques (5) et une largeur de 0,60 mm à 1,20 mm.

10. Pneumatique de véhicule selon l'une quelconque des revendications 1 à 9, **caractérisé en ce que**, lorsque des pas (P₁, P₂, P₃) ayant trois longueurs circonférentielles différentes (L₁, L₂, L₃) sont prévus, une entaille (6) est réalisée respectivement dans les structures de profil de type bloc qui appartiennent aux pas (P₁) ayant la plus petite longueur circonférentielle (L₁) et deux entailles (7, 8) sont réalisées dans les structures de profil de type bloc qui appartiennent aux pas (P₂, P₃) ayant la deuxième plus grande et la plus grande longueur circonférentielle (L₂, L₃).

11. Pneumatique de véhicule selon l'une quelconque des revendications 1 à 10, **caractérisé en ce que**, lorsque des pas (P₁, P₂, P₃) ayant trois longueurs circonférentielles différentes (L₁, L₂, L₃) sont prévus, des entailles (6, 8) sont réalisées dans des structures de profil de type bloc qui appartiennent aux pas (P₁, P₃) ayant la plus petite et la plus grande longueur circonférentielle (L₁, L₂), lesquelles entailles présentent une largeur qui est supérieure de 0,10 mm à 0,30 mm à la largeur des entailles (7) dans les pas (P₂) ayant la deuxième plus grande longueur circonférentielle (L2).

12. Pneumatique de véhicule selon l'une quelconque des revendications 1 à 11, **caractérisé en ce que**, lorsque des pas (P₁, P₂, P₃) ayant trois longueurs circonférentielles différentes (L₁, L₂, L₃) sont prévus, des entailles (6, 8) sont réalisées dans des structures de profil de type bloc qui appartiennent aux pas (P₁, P₃) ayant la plus petite et la plus grande longueur circonférentielle (L₁, L₂), lesquelles entailles présentent une largeur qui est de 0,80 mm à 1,20 mm, de préférence les entailles (6, 8) dans les pas (P₁, P₃) ayant la plus petite et la plus grande longueur circonférentielle (L₁, L₃) présentant des largeurs qui coïncident.

13. Pneumatique de véhicule selon l'une quelconque des revendications 1 à 12, **caractérisé en ce que**, lorsque des pas (P₁, P₂, P₃) ayant trois longueurs circonférentielles différentes (L₁, L₂, L₃) sont prévus, des entailles (7) sont réalisées dans des structures de profil de type bloc appartenant aux pas (P₂) ayant la deuxième plus grande longueur circonférentielle (L₂), lesdites entailles ayant une largeur qui est de 0,60 mm à 1,00 mm.

14. Pneumatique de véhicule selon l'une des revendications 1 à 13, **caractérisé en ce que** d'autres entailles (9, 10) sont prévues, qui relient les extrémités ou les sections d'extrémité d'au moins certaines des entailles (6, 7, 8, 8') s'étendant entre les rainures obliques (5) à la rainure circonférentielle (1) qui délimite la nervure de profil centrale (3) plus loin du côté intérieur de la bande de roulement et/ou qui s'étendent depuis la zone de raccordement des sections de rainure (5a, 5b) des rainures obliques (5) jusqu'à la rainure circonférentielle (1) mentionnée.

15. Pneumatique de véhicule selon la revendication 14, **caractérisé en ce que** les autres entailles (9, 10) s'étendent selon un angle aigu de jusqu'à 30° par rapport à la direction axiale et de préférence de manière rectiligne, et présentent une largeur de 0,40 mm à 1,20 mm, en particulier de 0,60 mm à 1,00 mm.
